# EUROPEAN PATENT APPLICATION

(11) **EP 4 427 949 A1**
(43) Date of publication of application: **11.09.2024**
(21) Application number: 22889737.7
(22) Date of filing: 11.10.2022
(51) Int. Cl.: B60C 19/00, B60C 1/00, C09D 7/63, C09D 7/65, C09D 107/00

(54) **RFID-TAG COATING RUBBER COMPOSITION, AND TIRE**

(30) Priority: 02.11.2021 JP 2021179850
(71) Applicant: BRIDGESTONE CORPORATION, Chuo-ku Tokyo 104-8340 (JP)
(72) Inventor: SUZUKI, Yoshihiko, Tokyo 104-8340 (JP)
(74) Representative: Marks & Clerk LLP
(86) International application number: PCT/JP2022/037919
(87) International publication number: WO 2023/079914

(57) **Abstract**

An RFID-tag coating rubber composition, comprises: a rubber component; an oil; and a tackifier. The RFID-tag coating rubber composition is excellent in both workability in a mixing and kneading process thereof and workability in a subsequent molding process of a tire.

## Description

### TECHNICAL FIELD

The present invention relates to an RFID-tag coating rubber composition, and a tire.

### BACKGROUND ART

It has been proposed in the prior art to provide a tire with an RFID (Radio Frequency Identification) tag in/from which various data such as production history, distribution history and use history of the tire can be written/read out, so that the tire is under reliable individual management (PTL 1).
The RFID tag is generally coated with coating rubber, taking it into consideration that the RFID tag is provided in a tire mainly constituted of a rubber member. The coating rubber for the RFID tag needs to satisfy various requirements, in this respect, such as satisfactory communication performance, satisfactory resistance to cracking, satisfactory adhesiveness to an adjacent rubber member, and satisfactory elastic modulus.

### CITATION LIST

### Patent Literature

PTL 1: EP1580041 B1

### SUMMARY OF THE INVENTION

### (Technical Problem)

However, the inventor of the present disclosure, who studied the conventional RFID-tag coating rubber composition, found out that the conventional RFID-tag coating rubber composition exhibits insufficient doughy consistency, i.e., or poor workability, during a mixing and kneading process thereof, which results in insufficient tackiness as a coating rubber composition and thus poor workability in a subsequent molding process of a tire.

In view of this, an object of the present disclosure is to solve the prior art problems described above and provide an RFID-tag coating rubber composition which achieves both satisfactory workability during a mixing and kneading process thereof and superior workability in a subsequent molding process of a tire.

Further, another object of the present disclosure is to provide a tire provided with an RFID tag and being excellent in productivity.

### (Solution to Problem)

The primary structural features of an RFID-tag coating rubber composition and a tire of the present disclosure for achieving the aforementioned objects are as follows.
[1] An RFID-tag coating rubber composition, comprising:
   a rubber component;
   an oil; and
   a tackifier.
[2] The RFID-tag coating rubber composition of [1], wherein a content of the oil is in the range of 2 to 20 parts by mass and preferably in the range of 2 to 15 parts by mass with respect to 100 parts by mass of the rubber component.
[3] The RFID-tag coating rubber composition of [1] or [2], wherein a content of the tackifier is in the range of 2 to 10 parts by mass with respect to 100 parts by mass of the rubber component.
[4] The RFID-tag coating rubber composition of any of [1] to [3], wherein the oil is a naphthenic oil containing asphalt therein.
[5] The RFID-tag coating rubber composition of any of [1] to [4], wherein the tackifier is at least one selected from the group consisting of rosin resin, terpene resin, petroleum resin, phenolic resin, coal-derived resin, and xylene resin.
[6] A tire, having an RFID tag coated with the RFID-tag coating rubber composition of any of [1] to [5].

### (Advantageous Effect)

According to the present disclosure, it is possible to provide an RFID-tag coating rubber composition which achieves both satisfactory workability during a mixing and kneading process thereof and superior workability in a subsequent molding process of a tire.
Further, another object of the present disclosure, it is possible to provide a tire being excellent in productivity.

### BRIEF DESCRIPTION OF THE DRAWINGS

In the accompanying drawing, wherein:

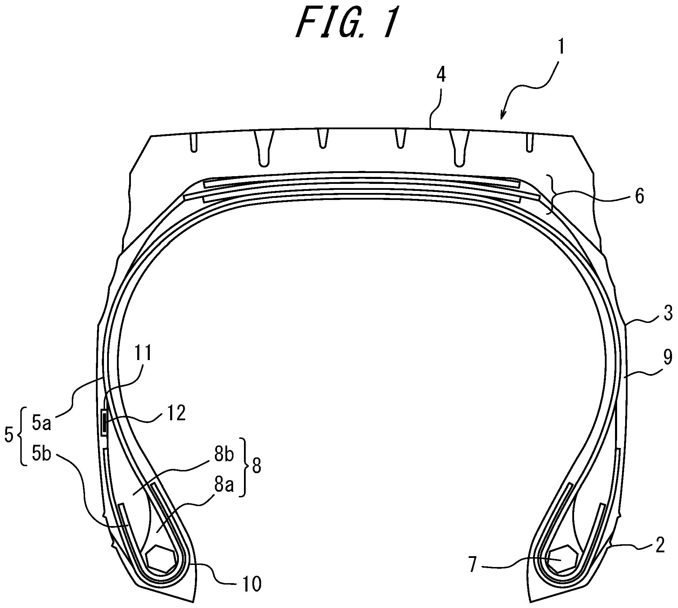

FIG. 1 is a sectional view of a tire of the present disclosure according to an embodiment thereof.

### DETAILED DESCRIPTION

Hereinafter, an RFID-tag coating rubber composition and a tire of the present disclosure will be demonstratively described in detail based on an embodiment thereof.

### < RFID-tag coating rubber composition >

An RFID-tag coating rubber composition of the present disclosure includes therein a rubber component; an oil; and a tackifier.

As described above, the conventional RFID-tag coating rubber composition exhibits insufficient doughy consistency, i.e., or poor workability, during a mixing and kneading process thereof, which results in insufficient tackiness of the coating rubber composition and thus poor workability in a subsequent molding process of a tire.

In contrast, the RFID-tag coating rubber composition of the present disclosure, containing an oil therein, exhibits satisfactory workability during a mixing and kneading process thereof because the oil improves doughy consistency in mixing and kneading of the rubber composition.

Further, the RFID-tag coating rubber composition of the present disclosure contains a tackifier therein so that the tackifier improves tackiness of the rubber composition. As a result, an RFID tag coated with the RFID-tag coating rubber composition (i.e., an RFID tag-rubber composite) is well prevented from coming off during a molding process of a (green) tire, which improves workability in the molding process of a tire.

Accordingly, the RFID-tag coating rubber composition of the present disclosure achieves both satisfactory workability during a mixing and kneading process thereof and superior workability in a subsequent molding process of a tire.

### (Rubber component)

The RFID-tag coating rubber composition of the present disclosure contains therein a rubber component, which imparts rubber elasticity to the composition. The rubber component is preferably diene rubber, which may either be one of natural rubber (NR) and synthetic diene rubber or include both of them. Examples of the synthetic diene rubber include isoprene rubber (IR), styrene-butadiene rubber (SBR), butadiene rubber (BR), styrene-isoprene rubber (SIR), chloroprene rubber (CR), and the like. Either single type or combination (blend) of two or more types of the aforementioned examples may be used as the rubber component.

### (Oil)

The RFID-tag coating rubber composition of the present disclosure contains an oil therein. As a result, i.e., due to inclusion of an oil in the rubber composition, doughy consistency of the rubber composition in a mixing and kneading process thereof improves, whereby workability of the rubber composition in the mixing and kneading process thereof improves.

The oil mentioned above comprehensively represents: an extender oil contained in the rubber component; and an oil component in a liquid state added as a compounding agent to the rubber composition. Examples of the oil include: a petroleum-based softener such as aromatic oil, paraffinic oil, naphthenic oil; and a plant-based softener such as palm oil, caster oil, cottonseed oil, soybean oil. The petroleum-based softener such as aromatic oil, paraffinic oil, naphthenic oil is preferable among those examples.

A naphthenic oil containing asphalt therein is preferable as the oil. In a case where the rubber composition includes therein a naphthenic oil which contains asphalt, doughy consistency of the rubber composition in a mixing and kneading process further improves, which results in even better workability of the rubber composition in the mixing and kneading process.

A mixture of naphthenic base oil and asphalt (a mass ratio of naphthenic base oil/asphalt is in the range of 95/5 to 30/70) is preferable as the naphthenic oil containing asphalt therein. Compatibility of the rubber component with the oil further improves when the mass ratio of naphthenic base oil/asphalt is within the range described above.

A hydrogenated naphthenic base oil is preferable and a hydrogenated naphthenic base oil obtained by highly hydrorefining aromatic oil or naphthenic oil by a high pressure-high temperature hydrorefining equipment is particularly preferable as the naphthenic base oil. Specifically, such a hydrogenated naphthenic base oil as described above is available as a commercial product like "SNH8^{®}", "SNH46^{®}", "SNH220^{®}", "SNH440^{®}", or the like manufactured by SANKYO YUKA KOGYO K.K..

A content of asphaltene component in the asphalt mixed with the naphthenic base oil is preferably 5 mass % or less in consideration of obtaining good compatibility of the asphalt with the rubber component in use and satisfactory doughiness of the rubber composition in a mixing and kneading process. A content of the asphaltene component is quantitatively determined from composition analysis carried out according to a method of the JPI Standard [The Japan Petroleum Institute Standard: JPI-5S-22-83 (1983), Standard Name "Fractioned Analysis for Asphaltic Bitumen by Column Chromatography"]. The asphalt described above is preferably straight asphalt and particularly preferably naphthenic straight asphalt. Further, the asphalt described above preferably has kinematic viscosity of ≤ 300 mm²/second at 120°C.

A method for mixing the asphalt as described above with the naphthenic base oil, which is not particularly restricted, preferably includes dissolving the asphalt in a naphthenic base oil (extender oil, compounded oil, or the like, as well), in consideration of easiness and economic efficiency of the preparation.

Examples of the naphthenic oil containing asphalt therein described above include the product name "A/O MIX" manufactured by SANKYO YUKA KOGYO K.K., obtained by mixing a hydrogenated naphthenic base oil prepared by a high pressure-high temperature hydrorefining equipment, with a naphthenic straight asphalt having an asphaltene content of ≤ 5 mass %, at a mixing mass ratio of 63/37.

A content of the oil is preferably ≥ 2 parts by mass, more preferably ≥ 4 parts by mass, and preferably ≤ 20 parts by mass, more preferably ≤ 15 parts by mass with respect to 100 parts by mass of the rubber component. Doughy consistency of the rubber composition in a mixing and kneading process improves, so that workability of the rubber composition in the mixing and kneading process improves, when the content of the oil is ≥ 2 parts by mass with respect to 100 parts by mass of the rubber component. In contrast, the rubber composition tends to experience insufficient tackiness in terms of workability in a tire molding process when the content of the oil is < 2 parts by mass with respect to 100 parts by mass of the rubber component. Such an effect caused by the oil as described above, of improving doughy consistency of the rubber composition in a mixing and kneading process, reliably increases, thereby further improving workability of the rubber composition in the mixing and kneading process, when the content of the oil is in the range of 2 to 20 parts by mass with respect to 100 parts by mass of the rubber component. In this respect, the effect caused by the oil, of improving doughy consistency of the rubber composition in a mixing and kneading process, more reliably increases, thereby even further improving workability of the rubber composition in the mixing and kneading process, when the content of the oil is in the range of 2 to 15 parts by mass with respect to 100 parts by mass of the rubber component.

### (Tackifier)

The RFID-tag coating rubber composition of the present disclosure contains a tackifier therein. Inclusion of the tackifier in the rubber composition improves tackiness of the rubber composition, thereby improving workability of the rubber composition in a tire molding process.

Various types of natural resins and synthetic resins can be used as the tackifier. Specifically, rosin resin, terpene resin, petroleum resin, phenolic resin, coal-derived resin, and xylene resin are preferably used as the tackifier. Either single type or combination of two or more types of the aforementioned examples may be used as the tackifier. Tackiness of the rubber composition further improves and thus workability of the rubber composition in a tire molding process further improves when the rubber composition contains, as a tackifier therein, at least one selected from the group consisting of rosin resin, terpene resin, petroleum resin, phenolic resin, coal-derived resin, and xylene resin.

Examples of the rosin resin, as the natural resin for the tackifier, include gum rosin, tall oil resin, wood resin, hydrogenated rosin, disproportionated resin, polymerized resin, glycerol ester of a modified rosin, pentaerythritol ester of a modified resin, and the like.

Examples of the terpene resin, as the natural resin for the tackifier, include: terpene resin such as α-pinene resin, β-pinene resin, dipentene; aromatic modified terpene resin; terpene phenolic resin; hydrogenated terpene resin; and the like.

Polymerized resin, terpene phenolic resin and hydrogenated terpene resin are preferable among those examples of the natural resin in terms of ensuring satisfactory fracture resistance of the rubber composition with which the natural resin is compounded.

The petroleum resin as a synthetic resin for the tackifier is obtained, for example, by polymerizing by using a Friedel-Crafts catalyst a mixture of decomposed oil fractions containing unsaturated hydrocarbons such as olefins and diolefins generated as byproducts together with petrochemical basic raw materials such as ethylene, propylene, and the like as a result of thermal decomposition of naphtha in the petrochemical industry. Examples of the petroleum resin include: aliphatic petroleum resin obtained by (co)polymerizing the C₅ fractions derived from thermal decomposition of naphtha (which resin will occasionally be referred to as "C₅ resin" hereinafter); aromatic petroleum resin obtained by (co)polymerizing the C₉ fractions derived from thermal decomposition of naphtha (which resin will occasionally be referred to as "C₉ resin" hereinafter); copolymerized petroleum resin obtained by copolymerizing the C₅ fractions and the C₉ fractions (which resin will occasionally be referred to as "C₅-C₉ resin" hereinafter); hydrogenated petroleum resin; petroleum resin derived from an alicyclic compound such as dicyclopentadiene; styrene resin derived from styrene, substituted styrene, or a copolymer of styrene and another monomer; and the like.

Examples of the C₅ fractions derived from thermal decomposition of naphtha generally include: olefin hydrocarbons such as 1-pentene, 2-pentene, 2-methyl-1-butene, 2-methyl-2-butene, 3-methyl-1-butene; diolefin hydrocarbons such as 2-methyl-1,3-butadiene, 1,2-pentadiene, 1,3-pentadiene, 3-methyl-1,2-butadiene; and the like. The aromatic petroleum resin obtained by (co)polymerizing the C₉ fractions is specifically a resin obtained by polymerizing C₉ aromatic compounds primarily constituted of vinyl toluene and/or indene as constituent monomers. Specific examples of the C₉ fractions derived from thermal decomposition of naphtha include: styrene homologue such as α-methylstyrene, β-methylstyrene, γ-methylstyrene; indene homologue such as indene, coumarone; and the like. Examples of the relevant product names include "PETROSIN" manufactured by Mitsui Petrochemical Industries, "PETRITE" manufactured by Mikuni Chemical Industry Co., Ltd., "NEOPOLYMER" manufactured by Nippon Petrochemicals Co., Ltd., "PETCOAL" manufactured by Tosoh Corporation, and the like.

Further, a modified petroleum resin obtained by modifying a petroleum resin derived from the C₉ fractions can be suitably used in consideration of workability. Examples of the modified petroleum resin include a C₉ petroleum resin modified by an unsaturated alicyclic compound, a C₉ petroleum resin modified by a compound having hydroxyl group, a C₉ petroleum resin modified by an unsaturated carboxylic compound, and the like.

Preferable examples of the unsaturated alicyclic compound include cyclopentadiene, methylcyclopentadiene, and the like. Further, a Diels-Alder reaction product of alkylcyclopentadiene is also preferable as the unsaturated alicyclic compound. Examples of the Diels-Alder reaction product of alkylcyclopentadiene include dicyclopentadiene, cyclopentadiene/methylcyclopentadiene codimer, tricyclopentadiene, and the like. Dicyclopentadiene is particularly preferable as the unsaturated alicyclic compound. A C₉ petroleum resin modified by dicyclopentadiene can be obtained, for example, by thermal polymerization under the presence of both dicyclopentadiene and the C₉ fractions. Examples of the C₉ petroleum resin modified by dicyclopentadiene include "NEOPOLYMER 130S" manufactured by Nippon Petrochemicals Co., Ltd.

Examples of the compound having hydroxyl group described above include an alcohol compound, a phenolic compound, and the like. Specific examples of the alcohol compound include an alcohol compound having a double bond such as allyl alcohol, 2-butene-1,4-diol, and the like. Examples of the phenolic compound which can be used include phenol and alkylphenols such as cresol, xylenol, p-tert-butylphenol, p-octylphenol, p-nonylphenol, and the like. Either single type or combination of two or more types of the aforementioned examples may be used as the compound having hydroxyl group. A C₉ petroleum resin having hydroxyl group can be manufactured by, for example, i) a method including: introducing an ester group into a petroleum resin by thermal polymerization of an alkyl ester of (metha)acrylic acid and petroleum fractions; and then reducing the ester group, and ii) a method including protecting/introducing a double bond in a petroleum resin and then hydrating the double bond. Although any of the C₉ petroleum resin having hydroxyl group obtained by the various methods as described above can be used, a petroleum resin modified by phenol is preferable for use as the C₉ petroleum resin having hydroxyl group, in consideration of advantages in the production process and performances thereof. The petroleum resin modified by phenol, which can be obtained by cationic polymerization of the C₉ fractions under the presence of phenol, is advantageous because the modification process involved therewith is easy, whereby the resin is inexpensive. Examples of the phenol-modified C₉ petroleum resin include "NEOPOLYMER-E-130" manufactured by Nippon Petrochemicals Co., Ltd.

The C₉ petroleum resin modified by an unsaturated carboxylic compound as described above can be obtained by modifying a C₉ petroleum resin with an ethylenic unsaturated carboxylic acid. Typical examples of the ethylenic unsaturated carboxylic acid include maleic acid, maleic anhydride, fumaric acid, itaconic acid, tetrahydrophthalic acid, tetrahydrophthalic anhydride, (metha)acrylic acid, citraconic acid, and the like. The C₉ petroleum resin modified by an unsaturated carboxylic acid can be obtained by thermal polymerization of a C₉ petroleum resin and an ethylenic unsaturated carboxylic acid. A C₉ petroleum resin modified by maleic acid is preferable as the C₉ petroleum resin modified by an unsaturated carboxylic acid in the present disclosure. Examples of the C₉ petroleum resin modified by an unsaturated carboxylic acid include "NEOPOLYMER-160" manufactured by Nippon Petrochemicals Co., Ltd.

A copolymerized resin of the C₅ fractions and the C₉ fractions which are obtained by thermal decomposition of naphtha can be suitably used as the petroleum resin. The C₉ fractions, of which type is not particularly restricted, are preferably the C₉ fractions obtained by thermal decomposition of naphtha. Specific examples of the C₅-C₉ resin include "TS30", "TS30-DL", "TS35", "TS35-DL" of "STRUCTOL^{®}" series manufactured by Schill+Seilacher GmbH.

Examples of the phenolic resin as a synthetic resin for the tackifier include: alkylphenol-formaldehyde resin and a rosin-modified derivative thereof; alkylphenolacetylene resin; modified alkyl phenolic resin; terpene phenolic resin; and the like. More specific examples of the phenolic resin include "Hitanol^{®} 1502" (novolak type alkyl phenolic resin) manufactured by Hitachi Chemical Company, Ltd., "Koresin^{®}" (p-tert-butylphenol-acetylene resin) manufactured by BASF SE, and the like.

Examples of the coal-derived resin as a synthetic resin for the tackifier include coumarone-indene resin and the like. Examples of the xylene resin as a synthetic resin for the tackifier include xylene-formaldehyde resin and the like. Further, polybutene is also applicable as a resin having tackiness.

A content of the tackifier is preferably ≥ 2 parts by mass, more preferably ≥ 4 parts by mass and preferably ≤ 10 parts by mass with respect to 100 parts by mass of the rubber component. Tackiness of the rubber composition increases, so that workability of the rubber composition in a molding process of a tire further improves, when the content of the tackifier is ≥ 2 parts by mass with respect to 100 parts by mass of the rubber component. In contrast, the rubber composition tends to experience insufficient tackiness in terms of workability in the tire molding process when the content of the tackifier is < 2 parts by mass with respect to 100 parts by mass of the rubber component. Such an effect caused by the tackier as described above, of increasing tackiness of the rubber composition, reliably increases, thereby even further improving workability of the rubber composition in the tire molding process, when the content of the tackifier is in the range of 2 to 10 parts by mass with respect to 100 parts by mass of the rubber component.

### (Others)

It is preferable that the RFID-tag coating rubber composition of the present disclosure further contains silica, a vulcanizing agent, a vulcanization accelerator and a silane coupling agent in addition to the rubber component, the oil and the tackifier described above.

Further, the RFID-tag coating rubber composition of the present disclosure may further contain, according to necessity, various components which are generally employed in the rubber industry and to be appropriately selected, such as fillers other than silica, antioxidant, wax, a softener other than oil, processing aid, stearic acid, zinc oxide (zinc white), and the like, unless inclusion of those additional components adversely affects the object of the present disclosure. Commercially available products can be suitably used as the additional components or compounding agents.

Inclusion of silica in the rubber composition successfully increases and thus improves resistance to cracking and elastic modulus of the rubber composition without a rise in relative permittivity thereof. The relative permittivity of the rubber composition is preferably ≤ 4.0 and more preferably ≤ 2.5 in consideration of maintaining a satisfactorily long communicable distance of the RFID tag.

Examples of the silica include wet silica (hydrated silica), dry silica (anhydrous silica), calcium silicate, aluminum silicate, and the like. Wet silica is preferable among those examples. Either single type or combination of two or more types of the aforementioned examples may be used as the silica.

A content of the silica is preferably in the range of 40 to 100 parts by mass with respect to 100 parts by mass of the rubber component in terms of further increasing and thus improving resistance to cracking and elastic modulus of the rubber composition.

Inclusion of a vulcanizing agent in the rubber composition makes the composition vulcanizable, thereby increasing and thus improving resistance to cracking and elastic modulus of the rubber composition. Examples of the vulcanizing agent include sulfur. The sulfur preferably contains insoluble sulfur therein. The insoluble sulfur is sulfur insoluble to carbon disulfide (amorphous polymeric sulfur), exhibiting lower solubility to the rubber component than soluble sulfur does and thus being less likely to cause bloom. A ratio of the insoluble sulfur in the sulfur is preferably in the range of 50 mass % to 90 mass % in terms of further improving workability of the rubber composition in the tire molding process.

A content of the vulcanizing agent is preferably 6.0 parts by mass or more with respect to 100 parts by mass of the rubber component in terms of further increasing thus improving resistance to cracking and elastic modulus of the rubber composition.

Inclusion of a vulcanizing accelerator in the rubber composition increases a vulcanization rate and thus successfully increases, i.e., improves elastic modulus of the rubber composition. Examples of the vulcanization accelerator include guanidine-based vulcanization accelerator, sulfenamide-based vulcanization accelerator, thiazole-based vulcanization accelerator, thiuram-based vulcanization accelerator, dithiocarbamatebased vulcanization accelerator, and the like. A guanidine-based vulcanization accelerator is preferable among those examples. In this respect, 1,3-diphenylguanidine (DPG) is particularly preferable as the guanidine-based vulcanization accelerator.

A content of the vulcanization accelerator is preferably in the range of 0.1 to 1.0 parts by mass with respect to 100 parts by mass of the rubber component in terms of reliably further increasing a vulcanization rate of the rubber composition, to further increase, i.e., improve elastic modulus of the rubber composition.

Inclusion of a silane coupling agent in the rubber composition enhances interaction between the rubber component and silica and thus improves dispersibility of silica into the rubber component. The silica, of which dispersibility to the rubber component has been thus improved, can fully demonstrate its effect, thereby further increasing and thus improving elastic modulus and resistance to cracking of the rubber composition.

Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilyl ethyl) tetrasulfide, bis(3-trimethoxysilylpropyl) tetrasulfide, bis(2-trimethoxysilylethyl) tetrasulfide, (3-mercaptopropyl)trimethoxysilane, (3-mercaptopropyl)triethoxysilane, (2-mercaptoethyl)trimethoxysilane, (2-mercaptoethyl)triethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, (3-mercaptopropyl)dimethoxymethylsilane, dimethoxymethylsilylpropyl-N,N-dimethylthiocarbamoyl tetrasulfide, dimethoxymethylsilylpropylbenzothiazolyl tetrasulfide, and the like.

A content of the silane coupling agent is preferably in the range of 5 to 20 mass % (i.e., 5 to 20 parts by mass with respect to 100 parts by mass of the silica) in terms of further improving dispersibility of silica into the rubber component and thereby further increasing and thus improving elastic modulus and resistance to cracking of the rubber composition.

The RFID-tag coating rubber composition of the present disclosure may either include or exclude carbon black in/from the filler(s) other than silica. A content of the carbon black is preferably ≤ 20 parts by mass and particularly preferably 0 parts by mass (i.e., the rubber composition contains no carbon black) with respect to 100 parts by mass of the rubber component in the present disclosure. The carbon black content of ≤ 20 parts by mass with respect to 100 parts by mass of the rubber component ensures a decrease in relative permittivity of the rubber composition and thus an increase in the communicable distance of the RFID tag. The carbon black content of 0 parts by mass with respect to 100 parts by mass of the rubber component (i.e., the rubber composition contains no carbon black) ensures a further decrease in relative permittivity of the rubber composition and thus a further increase in the communicable distance of the RFID tag.

### (Method for manufacturing rubber composition)

A method for manufacturing the rubber composition described above is not particularly restricted. The rubber composition can be manufactured, for example, by: blending, mixing and kneading the rubber component, the oil, the tackifier described above, and various other components optionally selected according to necessity; and subjecting the mixture thus mixed and kneaded, to warming, extrusion, and the like. Further, a vulcanized rubber can be obtained by vulcanizing the rubber composition thus obtained.

Conditions during the mixing and kneading process are not particularly restricted. Various relevant conditions such as a volume of a raw material to be charged into a kneader, rotational speed of a rotor, ram pressure, temperature and time period in the mixing and kneading process, type of a kneader, and the like can be optionally selected according to the purpose. Examples of the kneader include Banbury mixer, intermix machine, kneader, rolls, and the like, which are generally employed for mixing and kneading of a rubber composition.

Conditions of the warming are not particularly restricted, either. Various relevant conditions such as temperature and time period in the warming process, type of a warming device, and the like can be optionally selected according to the purpose. Examples of the warming device include warming rolls and like, which are generally employed for warming of a rubber composition.

Conditions of the extrusion are not particularly restricted, either. Various relevant conditions such as extrusion time, extrusion speed, type of an extruder, temperature in the extrusion process, and the like can be optionally selected according to the purpose. Examples of the extruder include an extruder or the like, which is generally employed for extrusion of a rubber composition. The temperature during the extrusion process may be optionally set as required.

Details of a device, a method, conditions, and the like for vulcanization are not particularly restricted and may be optionally decided/selected according to the purpose. Examples of a vulcanizing device include a vulcanizing molding machine provided with a die, which is generally employed for vulcanization of a rubber composition. Temperature, as a condition during the vulcanization process, is, for example, in the range of 100 °C to 190 °C or so.

### < Tire >

A tire of the present disclosure characteristically includes therein an RFID tag coated with the RFID-tag coating rubber composition described above. The tire of the present disclosure is excellent in productivity because it includes therein an RFID tag coated with the RFID-tag coating rubber composition described above.

The RFID tag is generally formed by a material such as metal, resin, or the like. For example, an RFID tag has an electronic device portion and an antenna portion connected with the electronic device portion, wherein a package of the electronic device portion is made of resin and the antenna portion is made of metal, in an embodiment thereof. In a case where the RFID tag is coated with the aforementioned RFID-tag coating rubber composition of the present disclosure in the embodiment, satisfactory adhesion between the RFID tag and the coating rubber can be ensured by pre-coating the RFID tag in advance (prior to the coating with the RFID-tag coating rubber composition) with an adhesive such as product name "Chemlok^{®}" manufactured by LORD Corporation.

The RFID tag is relatively hard as compared with other rubber members in the tire. Therefore, it is preferable that the coating rubber of the RFID tag has higher elastic modulus (i.e., is harder) than a rubber member adjacent thereto (for example, side rubber, stiffener, or the like described below) in order to suppress concentration of stress on the RFID tag. In this respect, the RFID-tag coating rubber composition described above, having high elastic modulus and thus being hard, reliably causes an effect of suppressing concentration of stress on the RFID tag.

The RFID tag is provided in the tire preferably in a portion thereof experiencing relatively small strain during running of the tire. It is preferable in an embodiment that an RFID tag coated with the RFID-tag coating rubber composition described above is provided between a stiffener disposed on the tire radially outer side of a bead core embedded in a bead portion of the tire and a side rubber disposed on the tire widthwise outer side of a carcass in a side portion of the tire. In this respect, it is more preferable in the embodiment that the RFID tag coated with the RFID-tag coating rubber composition is provided at a position on the inner side in the tire radial direction from the maximum width portion of the tire.

FIG. 1 is a sectional view of a tire of the present disclosure according to an embodiment thereof.

The tire 1 shown in FIG. 1 has: a pair of bead portions 2; a pair of side portions 3; a tread portion 4 continuous with the respective side portions 3; a carcass 5 extending in a toroidal shape across the pair of bead portions 2, for reinforcing the bead portions 2, the side portions 3 and the tread portion 4; a belt 6 disposed on the outer side in the tire radial direction of a crown portion of the carcass 5; and a stiffener 8 disposed on the outer side in the tire radial direction of a ring-shaped bead core 7 embedded in each of the bead portions 2.

The stiffener 8 includes therein: a hard stiffener 8a having relatively high rigidity and being adjacent to the corresponding bead core 7 on the outer side in the tire radial direction of the bead core 7; and a soft stiffener 8b having relatively low rigidity and being adjacent to the corresponding hard stiffener 8a on the outer side in the tire radial direction of the hard stiffener 8a.

A side rubber 9 is provided on the outer side in the tire widthwise direction of the carcass 5 in each side portion 3.

In the tire 1 shown as an example in the drawing, the carcass 5 has: a main body portion 5a extending in a toroidal shape across the pair of bead cores 7; and a turn-up portion 5b wound up around each bead core 7 from the inner side toward the outer side in the tire widthwise direction and then toward the outer side in the tire radial direction of the bead core 7. It should be noted that the structure and the number of plies of the carcass 5 are not limited to those shown in FIG. 1. The stiffener 8 is disposed between the main body portion 5a and each of the turn-up portions 5b. A wire chafer 10 is disposed on the outer surface side of each turn-up portion 5b of the carcass 5. The wire chafer 10 extends along the stiffener 8 on the outer surface side in the tire widthwise direction of the stiffener 8.

A RFID tag 12 coated with coating rubber 11 is provided on the outer side in the tire radial direction of the wire chafer 10 between the side rubber 9 and the soft stiffener 8b at a position on the inner side in the tire radial direction from the maximum width portion of the tire. The RFID-tag coating rubber composition described above is used for the coating rubber 11 in the present embodiment.

The RFID tag 12 coated with the coating rubber 11 (the RFID tag-rubber composite) can be prepared by, for example, interposing the RFID tag 12 between two rubber sheets made of the RFID-tag coating rubber composition described above. The tire of the present embodiment can be manufactured by: laminating the relevant rubber members and the RFID tag-rubber composite, thereby building a green tire; and subjecting the green tire to vulcanization.

The rubber composition applied to the coating rubber 11 (i.e., the RFID-tag coating rubber composition of the present disclosure) is excellent in both workability in a mixing and kneading process thereof and workability in a subsequent molding process of a tire, as described above, whereby the tire 1 shown in FIG. 1 is excellent in productivity.

The tire of the present embodiment may be manufactured, depending on the tire type for the application, by either i) molding the aforementioned rubber composition in an unvulcanized state and subjecting a resulting green tire to vulcanization or ii) subjecting the aforementioned rubber composition to a preliminary vulcanization process, molding a resulting half-vulcanized rubber, and subjecting a resulting tire to a main vulcanization process. The tire of the present disclosure is preferably a pneumatic tire, wherein examples of gas with which the tire is to be inflated include inert gas such as nitrogen, argon, helium or the like, as well as ambient air and air of which oxygen partial pressure has been adjusted.

### EXAMPLES

The present disclosure will be described further in detail by Examples hereinafter. The present disclosure is not limited by any means to these Examples.

### < Preparation of rubber composition >

Each of unvulcanized rubber composition samples of Examples and Comparative Examples was obtained by:
charging the blending components, excluding a vulcanization accelerator, a vulcanizing agent and other "Pro" chemical agents, according to the blending formulation thereof shown in Table 1/Table 2 at a charging rate in the range of 55 % to 65 % in a 1.7 L Banbury mixer manufactured by Kobe Steel, Ltd.;
mixing and kneading the mixture at a rotational speed of 80 rpm until either the temperature of the mixture reached 160 °C or four minutes passed after the start of mixing and kneading;
then adding a vulcanization accelerator, a vulcanizing agent and other "Pro" chemical agents, by the amounts according to the blending formulation shown in Table 1/Table 2, to the mixture thus mixed and kneaded; and
further mixing and kneading the resulting mixture for two minutes at 80 °C by using open rolls, thereby obtaining the unvulcanized rubber composition sample. Further, a plate-shaped crosslinked rubber composition sample was prepared by vulcanizing the unvulcanized rubber composition sample thus obtained, at 145 °C for 45 minutes.

### < Evaluation of rubber composition >

Communication performance, workability in a mixing and kneading process, and workability in a molding process of a tire were evaluated for each of the rubber composition samples of Examples and Comparative Examples thus obtained by the respective methods described below. The results are shown in Table 1 and Table 2.

### (1) Communication performance

A relative permittivity of the rubber composition is measured for each of the plate-shaped vulcanized rubber composition samples at 860 MHz by using a relative permittivity analyzer. It is known from the measurement results of relative permittivity in the past that a relative permittivity of a rubber composition can be deduced from an amount of carbon black blended therein. Accordingly, a relative permittivity of the rubber composition is obtained by calculation in the present disclosure.

### (2) Workability

Workability of the rubber composition was determined by: storing each of the unvulcanized rubber composition samples with smooth rubber surfaces, obtained by mixing and kneading the relevant mixture for two minutes at 80 °C by using open rolls, in a thermostatic chamber at 40 °C for two weeks; and then visually observing absence/presence of sulfur bloom at the surfaces of the unvulcanized rubber composition sample. The unvulcanized rubber composition sample, of which surfaces became white due to occurrence of sulfur bloom, tends to exhibit significantly deteriorated rubber adhesiveness, which possibly renders the subsequent tire-building work difficult. Moreover, the unvulcanized rubber composition sample, of which surfaces became white due to occurrence of sulfur bloom, tends to exhibit deteriorated doughy consistency, i.e., deteriorated workability, in a mixing and kneading process thereof.

### (3) Tackiness performance of unvulcanized rubber

Rubber-metal interface tackiness (N) was measured by using "PICMA Tack Tester (a tackiness checker)" manufactured by Toyo Seiki Seisaku-sho Ltd. for each of the unvulcanized rubber composition samples with smooth rubber surfaces, obtained by passing the unvulcanized rubber composition sample through the rolls.

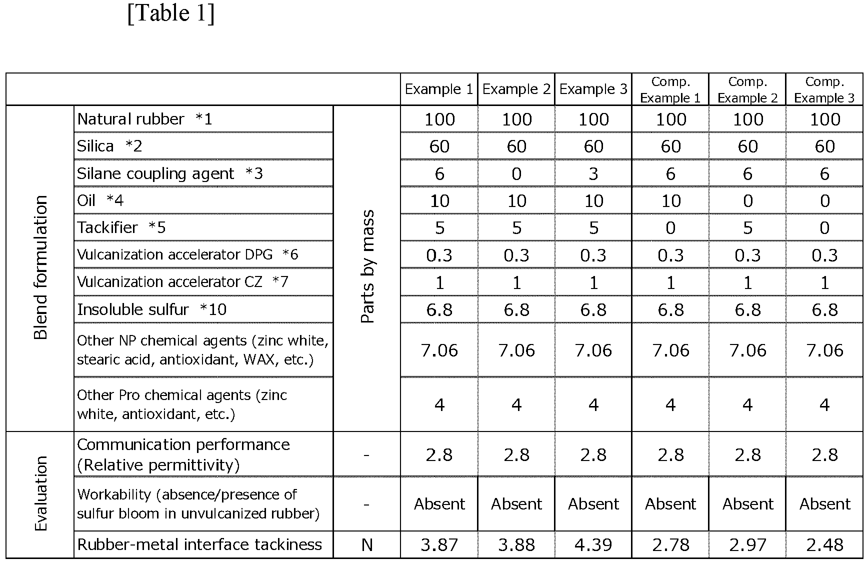

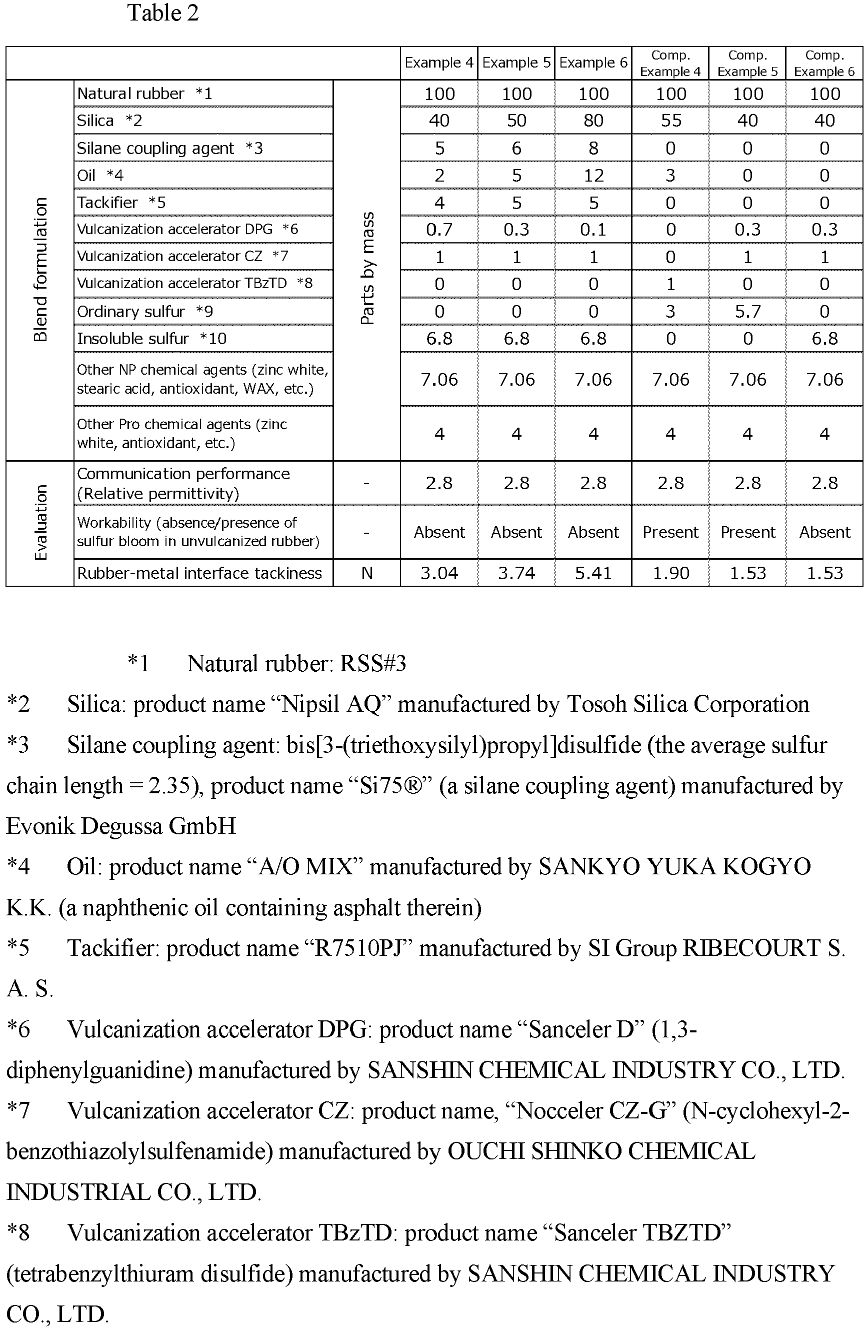

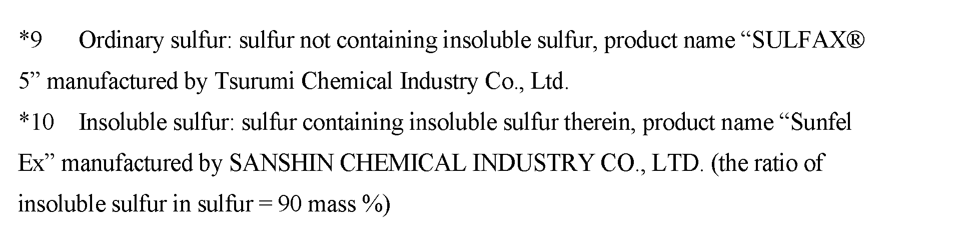

It is understood from Table 1 and Table 2 that the rubber compositions of Examples according to the present disclosure are unanimously excellent in both workability in a mixing and kneading process thereof and workability in a subsequent molding process of a tire.

### REFERENCE SIGNS LIST

- 1:: Tire
- 2:: Bead portion
- 3:: Side portion
- 4:: Tread portion
- 5:: Carcass
- 5a:: Main body portion of carcass
- 5b:: Turn-up portion of carcass
- 6:: Belt
- 7:: Bead core
- 8:: Stiffener
- 8a: Hard stiffener
- 8b:: Soft stiffener
- 9:: Side rubber
- 10:: Wire chafer
- 11:: Coating rubber
- 12:: RFID tag

## Claims

1. An RFID-tag coating rubber composition, comprising:
a rubber component;
an oil; and
a tackifier.

2. The RFID-tag coating rubber composition of claim 1, wherein a content of the oil is in the range of 2 to 15 parts by mass with respect to 100 parts by mass of the rubber component.

3. The RFID-tag coating rubber composition of claim 1 or 2, wherein a content of the tackifier is in the range of 2 to 10 parts by mass with respect to 100 parts by mass of the rubber component.

4. The RFID-tag coating rubber composition of any of claims 1 o 3, wherein the oil is a naphthenic oil containing asphalt therein.

5. The RFID-tag coating rubber composition of any of claims 1 to 4, wherein the tackifier is at least one selected from the group consisting of rosin resin, terpene resin, petroleum resin, phenolic resin, coal-derived resin, and xylene resin.

6. A tire, having an RFID tag coated with the RFID-tag coating rubber composition of any of claims 1 to 5.
